(19) Europäisches Patentamt
European Patent Office
Office européen des brevets

(11) Publication number: **0 182 670 B1**

(12) **EUROPEAN PATENT SPECIFICATION**

(45) Date of publication of patent specification: **24.10.90**

(51) Int. Cl.$^5$: **G 11 B 7/24**

(21) Application number: **85308493.7**

(22) Date of filing: **21.11.85**

(54) **Optical recording medium.**

(30) Priority: **22.11.84 JP 246345/84**

(43) Date of publication of application:
**28.05.86 Bulletin 86/22**

(45) Publication of the grant of the patent:
**24.10.90 Bulletin 90/43**

(84) Designated Contracting States:
**DE FR GB**

(56) References cited:
**GB-A-2 066 489**
**US-A-4 458 004**
**US-A-4 492 750**

**PATENT ABSTRACTS OF JAPAN, vol. 7, no. 217 (M-245)1362r, 27th September 1983; & JP - A - 58 112 794 (RICOH) 05-07-1983**

(73) Proprietor: **VICTOR COMPANY OF JAPAN, LIMITED**
**3-12, Moriya-cho**
**Kanagawa-ku Yokohama (JP)**

(72) Inventor: **Nishizawa, Akira**
**170-23, Mitsukyo**
**Seya-ku Yokohama (JP)**
Inventor: **Sueyoshi, Naozi**
**1089-2, Nakayama-cho**
**Midori-ku Yokohama (JP)**
Inventor: **Maruta, Hideki**
**7-29-27, Tomioka Nishi**
**Kanazawa-ku Yokohama (JP)**

(74) Representative: **Myerscough, Philip Boyd et al**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 182 670 B1**

Courier Press, Leamington Spa, England.

## Description

This invention relates to an optical recording medium in which optical information is recorded and reproduced by means of high energy optical beams such as a semiconductor laser beam.

Direct-read-after-write (hereinafter referred to simply as DRAW) systems have been developed and are now in use, in which high energy beams such as laser beams, are used to record and reproduce optical information. Intensive studies have now been made to develop disc mediums for use in the DRAW systems.

Broadly, the disc medium can be classified into two groups. One group makes use of inorganic metals as a recording layer, whereas the other group uses organic pigments or dyes. The former medium has the great advantage that because information is recorded in a high contrast, the signal-to-noise ratio becomes high when the medium is reproduced. However, the metal layer is apt to undergo oxidation with the attendant disadvantage that the medium is not durable. In addition, the metals used are, in most cases, harmful to the human body, thus presenting the problem of public nuisance.

On the other hand, the latter medium undesirably requires an additional reflective film since organic dyes are not generally so high in reflectivity. This disadvantageously makes the manufacture process complicated and invites a high manufacture cost.

The invention provides an optical recording medium for use in recording and reproducing optical information by application of a high energy beam and in which the information is recorded as physical variations, the medium comprising a substrate which is transparent to a high energy beam and has tracking guides for servo control on one side thereof and a layer of manganese phthalocyanine formed directly on said one side.

The optical recording medium of the invention overcomes the drawbacks of both types of known optical recording mediums and contains no reflective film. The optical recording medium which is less expensive than known counterparts using organic dyes, has a high signal-to-noise ratio at the time of reproduction and can be reproduced using the low output power of a semiconductive laser.

The optical recording medium of the invention is suitable for recording and reproducing optical information by application of a high energy beam. The medium is of the type in which an optical information signal is encoded as physical variations or pits.

In order to prevent deposition of dust on the phthalocyanine layer, a protective layer may be provided over and arranged parallel at a distance from phthalocyanine layer to establish a gap between the phthalocyanine layer and the protective layer. A double-sided recording medium can be readily fabricated using two medium units of the type described above. More particularly, a pair of the above medium units are assembled such that the manganese phthalocyanine films are facing each other at a distance to allow a gap therebetween which is equal to or larger than the thickness of the manganese phthalocyanine layer. The resultant medium can be recorded on opposite sides, i.e. recording on double sides becomes possible.

### Brief Description of the Drawings

Fig. 1 is a schematic view of part of an optical recording medium according to one embodiment of the invention;

Fig. 2 is a schematic view of part of an optical recording medium according to another embodiment of the invention;

Fig. 3 is a schematic view of part of a double-sided optical recording medium according to a further embodiment of the invention;

Fig. 4 is a graphical representation of absorbance of optical recording mediums of the invention and for comparison in relation to variation in wavelength; and

Fig. 5 is a graphical representation of regular reflectance of optical recording mediums of the invention and for comparison in relation to variation in wavelength.

### Detailed Description and Embodiments of the Invention

As described above, the present invention is characterized by using, as an optical recording layer, manganese phthalocyanine. Manganese phthalocyanine has the following formula

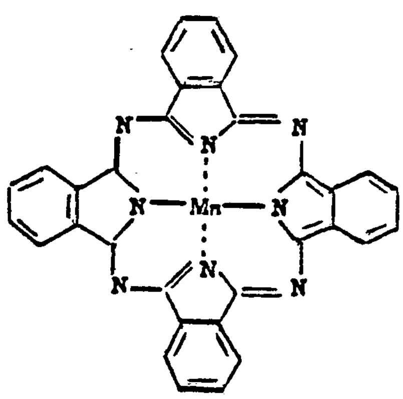

We have found that manganese phthalocyanine has a fairly high reflectance when used as an optical recording layer. This means that an additional reflective film, as used in prior optical recording mediums using organic dyes, is not necessary. This is very advantageous in that the manufacture process becomes simple and the medium can be manufactured at lost cost. To our surprise, it has also been found that the signal-to-noise ratio becomes much better than the ratio attained by the case where a reflective film is provided as in prior art mediums.

Manganese phthalocyanine of the above formula has a high reflectance and an appropriate absorbance in a wavelength range of from 700 to

900 nm, which is a wavelength usually generated from semiconductor lasers ordinarily used for these purposes. Especially, in the case of an optical recording medium of the DRAW type, it is desirable that the absorbance of the recording medium in the wavelength of a semiconductor laser beam be rather high. This is because the output power for the laser at the time of recording can be decreased, so that a substrate do not undergo an undesirable thermal history. In this sense, manganese phthalocyanine is very useful.

Since manganese phthalocyanine exhibits a high reflectance upon application of semiconductor laser beams, no additional reflective film is necessary as mentioned above. In addition, it has been unexpectedly found that the signal-to-noise ratio of the recording medium of the invention is very high. For instance, an optical recording medium comprising an aluminum reflective layer provided between a substrate and a manganese phthalocyanine film has a signal-to-noise ratio of 30dB, whereas an optical recording medium of the invention which is free of the aluminum reflective film, has a signal-to-noise ratio as high as 48 dB.

The manganese phthalocyanine of the foregoing formula is a phthalocyanine complex in which Mn is present as a central metal. A number of metalo-phthalocyanines are known but are completely different in nature from manganese phthalocyanine when applied as an optical recording layer. For example, metalo-phthalocyanines containing, as the central metal, Cu, Co, Ni, Fe, Zn and Sn, are known. However, when these metalo-phthalocyanines are used as the recording layer, good results cannot be obtained as will be seen from comparative examples appearing hereinafter.

Reference is now made to the accompanying drawings and particularly, to Figs. 1 to 3, in which like reference numerals indicate like parts. In Fig. 1, there is shown an optical recording medium 1 which comprises a substrate 2 and a manganese phthalocyanine layer 3 formed on the substrate 2. The substrate 2 has, on one side thereof, tracking guides or grooves 4 which serve for servo control as is well known in the art. These tracking guides 4 are formed by molding of the substrate 2 and have usually a depth of 0.1 μm and pitches of 1.6 μm. On the side of the substrate 2 where the guides are formed, is formed the layer 3. The substrate 2 is generally in the form of a disk but may have any other forms, if desired. The substrate 2 should be made of materials which are transparent to high energy beams such as semiconductor laser beams and include, for example, glasses and synthetic resins such as methacrylic resin and polycarbonate resins.

The manganese phthalocyanine layer 2 is readily formed by vacuum deposition under conditions of a vacuum of $10^{-2}$ to $10^{-3}$ Pa and a temperature of 300 to 500°C. The layer 2 is formed to have a thickness of 50(2K — 1) to 90(2k — 1) nm, preferably 60(2k — 1) to 80(2k — 1) nm in which k is a positive integer and preferably, k is 1.

The recording medium using manganese phthalocyanine is advantageous in that the recording speed is high and it is free of any problems of toxicity as in the case of lead phthalocyanine. It will be noted that in Fig. 1, a high energy beam is applied from the side indicated by arrow A.

The recording medium 1 as shown in Fig. 1 may have a protective layer 5 formed through a gap 6 at the side of the manganese phthalocyanine layer 2 as particularly shown in Fig. 2. By the formation of the protective layer 5, dust is prevented from deposition on the layer 2, reproduction characteristics do not deteriorate. The protective layer 5 is usually made of a transparent material such as vinyl chloride resins, methacrylate resins and polycarbonate resins. The gap 6 is arranged to be equal to or larger than the thickness of the manganese phthalocyanine layer 2. The protective layer 5 and the manganese phthalocyanine layer-bearing substrate 1 are fixedly secured, for example, at the peripheral margin thereof.

In the above embodiments, the optical recording medium is a single-sided medium. However, a double-sided recording medium may be readily fabricated, in which a pair of medium units of the type described above, i.e. each unit has the same construction as shown in Fig. 1, are assembled so that the manganese phthalocyanine layers of the respective units are facing each other at a distance equal to or larger than the thickness of the manganese phthalocyanine layer. This is particularly shown in Fig. 3, in which there is shown a unit 1a which comprises a substrate 2a and a manganese phthalocyanine layer 3a formed on the substrate 2a. Similarly, another unit 1b has a substrate 2b and a manganese phthalocyanine layer 3b. The two units are assembled in such a way that the layers 3a, 3b are in face-to-face relation through a gap 7. The gap 7 is determined to be equal to or larger than the thickness of the layer 3a or 3b. In this case, the paired units are bonded at inner and/or outer marginal portions thereof by a suitable means. In this double-sided medium, the units 1a and 1b are recorded and reproduced by means of high energy beams indicated by arrows a and b, respectively.

The high energy beams used in the practice of the invention may be any laser beams having a wavelength ranging from 700 to 900 nm. For this purpose, semiconductor lasers such as semiconductive GaAs-AlGaAs lasers are generally used.

The present invention is more particularly described by way of example.

Example

A polycarbonate resin disk having a diameter of 12 cm was placed in a vacuum evaporator having a boat for evaporation of a sample target. Fifty milligrams of manganese phthalocyanine of the afore-indicated formula (product of Dainichi Seika K.K.) was placed on the boat. The vacuum evaporator was kept at a vacuum of $10^{-3}$ Pa and

the boat was heated to 500°C, so that manganese phthalocyanine was evaporated on one surface of the disk, thereby obtaining an optical disk as shown in Fig. 1.

The thickness of the phthalocyanine layer was measured by an optical interference measuring instrument and was 80 nm.

The manganese phthalocyanine layer of the optical disc was subjected to measurement of an absorbance characteristic. The results are shown by solid line in Fig. 4. From the figure, it will be seen that the curve has an absorption peak at 760 nm at which the absorbance is about 0.9. At 780 nm, the absorbance is about 0.8. From this, it will be seen that the manganese phthalocyanine layer has an alpha-type crystal form.

Upon measurement of a regular reflectance characteristic, the results are just as shown by solid line in Fig. 5. The regular reflectance, determined by an integrator, was found to be about 40% at 780 nm.

Next, an information signal was recorded on and reproduced from the optical disk using a semiconductor laser beam having a wavelength of 780 nm. When the disk was reproduced, the signal-to-noise ratio at a frequency of 1 MHz was 48 dB. It will be noted that the recording was conducted under conditions of a frequency of the optical disk of 900 r.p.m., a laser beam pulse frequency of 1 MHZ at a linear velocity of 4.8 m/second, and an average output power of 3.5 mW. After the recording, the disk was reproduced at a laser output power of 0.5 mW.

Comparative Example 1

The general procedure of Example was repeated except that the polycarbonate resin disk was first provided with a 50 nm thick aluminum reflective film and then placed in the vacuum evaporator, thereby obtaining a reflective film-bearing optical disk.

This optical disk was subjected to recording by the use of a semiconductor laser capable of outputting a beam with a wavelength of 780 nm, at an average output power of 4 mW. Thereafter, the disk was reproduced at a laser output power of 0.5 mW. As a result, it was found that the signal-to-noise ratio at the reproduction operation was as low as 30 dB.

From the above, it will be appreciated that the signal-to-noise ratio of the reflective film-bearing medium at 1 MHz is lower by 18 dB than the medium of the invention. Thus, the optical disk of the invention is much superior to the optical disk of this comparative example.

Comparative Example 2

The general procedure of Example was repeated except that phthalocyanine was formed, instead of manganese phthalocyanine, in a thickness of 90 nm, thereby obtaining a reflective film-free optical disk.

The absorbance characteristic of the phthalocyanine film was measured with the results as shown by broken line in Fig. 4. More particularly, the regular reflectance at 780 nm is 23%. In the same manner as in Example, a semiconductor laser was used for recording on the disk at a wavelength of 780 nm and an output power of 8 mW, followed by reproduction at a laser output power of 1 mW. As a result, it was found that the signal-to-noise ratio was 25 dB.

Comparative Example 3

The general procedure of Example was repeated except that iron phthalocyanine was formed, instead of manganese phthalocyanine, in a thickness of 70 nm, thereby obtaining a reflective film-free optical disk.

The absorbance and regular reflectance of the optical disk at 780 nm were measured and found to be 0.2% and 22%, respectively. The disk was subjected to recording by the use of a semiconductor laser capable of emitting a beam with a wavelength of 780 nm, at an output power of 8 mW and then reproduced at an output power of 1 mW. As a result, it was found that the signal-to-noise ratio was as low as 20 dB.

Comparative Example 4

The general procedure of Example was repeated except that zinc phthalocyanine was used instead of manganese phthalocyanine, thereby obtaining an optical disk.

The absorbance and regular reflectance of the zinc phthalocyanine layer at 780 nm were, respectively, 0.2 and 16%.

The signal-to-noise ratio was found to be as low as 15 dB when determined in the same manner as in Comparative Example 3.

Comparative Example 5

The general procedure of Example was repeated except that neodymium phthalocyanine was used instead of manganese phthalocyanine, thereby obtaining an optical disk.

The absorbance and regular reflectance of the disk were, respectively, 0.2 and 26%. The signal-to-noise ratio was found to be as low as 25 dB when determined in the same manner as in Comparative Example 3.

Comparative Example 6

The general procedure of Example was repeated except that cobalt phthalocyanine was used instead of manganese phthalocyanine, thereby obtaining an optical disk.

The absorbance and regular reflectance of the disk were, respectively, 0.2 and 25%. The signal-to-noise ratio was found to be as low as 25 dB when determined in the same manner as in Comparative Example 3.

Comparative Example 7

The general procedure of Example was repeated except that copper phthalocyanine was used instead of manganese phthalocyanine, thereby obtaining an optical disk.

The absorbance and regular reflectance of the

disk were, respectively, 0.2 and 21%. The signal-to-noise ratio was found to be as low as 25 dB when determined in the same manner as in Comparative Example 3.

## Claims

1. An optical recording medium for use in recording and reproducing optical information by application of a high energy beam and in which the information is recorded as physical variations, the medium (1) comprising a substrate (2) which is transparent to a high energy beam and has tracking guides (4) for servo control on one side thereof and a layer (3) of manganese phthalocyanine formed directly on said one side.

2. An optical recording medium according to Claim 1 wherein the manganese phthalocyanine layer (3) has a thickness of 50(2k — 1) to 90(2k — 1) nm in which k is a positive integer.

3. An optical recording medium according to Claim 2, wherein the thickness is from 60(2k — 1) to 80(2k — 1).

4. An optical recording medium according to claim 2 or 3 wherein k is 1.

5. An optical recording medium according to any one of the preceding claims which also comprises a protective layer (5) provided over and arranged parallel to the manganese phthalocyanine layer (3) at a distance providing a gap (6) between said protective layer (5) and said manganese phthalocyanine layer (3).

6. An optical recording medium according to Claim 5, wherein the distance is equal to or larger than the thickness of said manganese phthalocyanine layer.

7. A double-sided optical recording medium which comprises a pair of units (1a and 1b), each unit being an optical recording medium as defined in claim 1, 2 or 3, the paired units being assembled such that the manganese phthalocyanine layers (3a and 3b) are facing each other at a distance providing a gap (7) therebetween which is equal to or larger than the thickness of the manganese phthalocyanine layer (3a or 3b).

## Patentansprüche

1. Optisches Aufzeichnungsmedium zur Verwendung bei der Aufzeichnung und Wiedergabe von optischen Informationen unter Anwendung eines Hochenergiestrahles, bei welchem die Information in Form physikalischer Veränderungen aufgezeichnet wird, wobei das Medium (1) ein Substrat (2) umfaßt, welches für einen Hochenergiestrahl transparent ist, und Spurführungen (4) für die Servosteuerung auf einer Seite hiervon aufweist und eine Schicht (3) aus Manganphthalocyanin, die direkt auf dieser einen Seite ausgebildet ist.

2. Optisches Aufzeichnungsmedium nach Anspruch 1, in welchem die Manganphthalocyaninschicht (3) eine Dicke von 50(2k — 1) bis 90(2k — 1) nm, worin k eine positive ganze Zahl ist, besitzt.

3. Optisches Aufzeichnungsmedium nach Anspruch 2, in welchem die Dicke von 60(2k — 1) bis 80(2k — 1) beträgt.

4. Optisches Aufzeichnungsmedium nach Anspruch 2 oder 3, worin k = 1 ist.

5. Optisches Aufzeichnungsmedium nach irgendeinem der vorhergehenden Ansprüche, welches weiterhin eine Schutzschicht (5) umfaßt, die über und parallel angeordnet zu der Manganphthalocyaninschicht (3) in einem Abstand vorgesehen ist, der einen Spalt (6) zwischen dieser Schutzschicht (5) und der Manganphthalocyaninschicht (3) bildet.

6. Optisches Aufzeichnungsmedium nach Anspruch 5, worin der Abstand gleich der oder größer als die Dicke der Manganphthalocyaninschicht ist.

7. Doppelseitiges optisches Aufzeichnungsmedium, welches ein Paar von Einheiten (1a und 1b) umfaßt, wobei jede Einheit ein optisches Aufzeichnungsmedium, wie in den Ansprüchen 1, 2 oder 3 definiert, ist, wobei die paarweisen Einheiten derart angeordnet sind, daß die Manganphthalocyaninschichten (3a und 3b) sich in einem Abstand gegenüberliegen, welcher einen Spalt (7) hierzwischen ergibt, der gleich der oder größer als die Dicke der Manganphthalocyaninschicht (3a oder 3b) ist.

## Revendications

1. Support d'enregistrement optique destiné à être utilisé dans l'enregistrement et la reproduction d'informations optiques à l'aide d'un faisceau de haute énergie, et dans lequel les informations sont enregistrées sous forme de variations physiques, le support (1) comprenant un substrat (2) qui est transparent pour le faisceau du haute énergie et qui comporte, sur l'un de ses côtés, des pistes d'alignement (4) pour une servo-commande, ainsi que, directement formée sur ce côté, une couche (3) de phtalocyanine au manganèse.

2. Support d'enregistrement optique conforme à la revendication 1, dans lequel la couche (3) de phtalocyanine au manganèse présente une épaisseur de 50(2k — 1) à 90(2k — 1) nm, k étant un entier positif.

3. Support d'enregistrement optique conforme à la revendication 2, dans lequel l'épaisseur vaut de 60(2k — 1) à 80(2k — 1) nm.

4. Support d'enregistrement optique conforme à la revendication 2 ou 3, dans lequel k vaut 1.

5. Support d'enregistrement optique conforme à l'une quelconque des revendications précédentes, qui comprend également une couche protectrice (5) disposée par-dessus la couche (3) de phtalocyanine au manganèse et parallèlement à celle-ci, à une certaine distance ménageant un espace (6) entre ladite couche protectrice (5) et ladite couche (3) de phtalocyanine au manganèse.

6. Support d'enregistrement optique conforme à la revendication 5, dans lequel la distance est égale ou supérieure à l'épaisseur de ladite couche de phtalocyanine au manganèse.

7. Support d'enregistrement optique à double

face, qui comprend une paire d'éléments (1a et 1b), chaque élément étant lui-même un support d'enregistrement optique tel que défini dans la revendication 1, 2 ou 3, les éléments appariés étant assemblés de telle façon que les couches (3a et 3b) de phtalocyanine au manganèse se font face l'une à l'autre, à une certaine distance ménageant un espace (7) entre elles, distance qui est égale ou supérieure à l'épaisseur de la couche (3a ou 3b) de phtalocyanine au manganèse.

FIG. 1

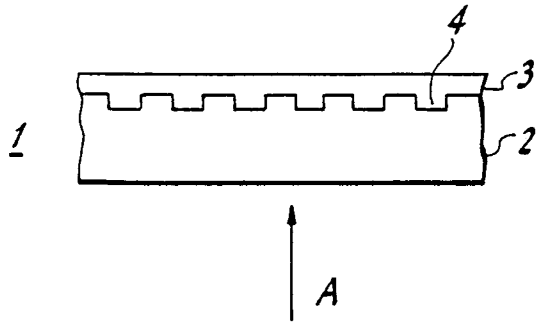


FIG. 2

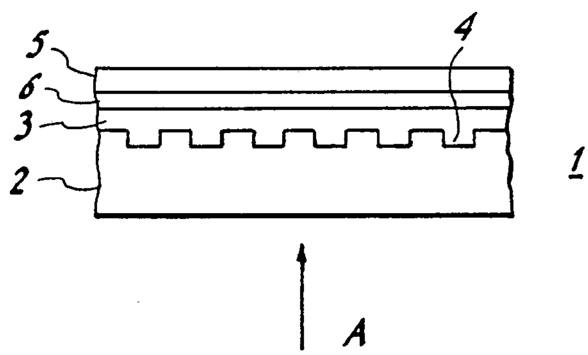


FIG. 3

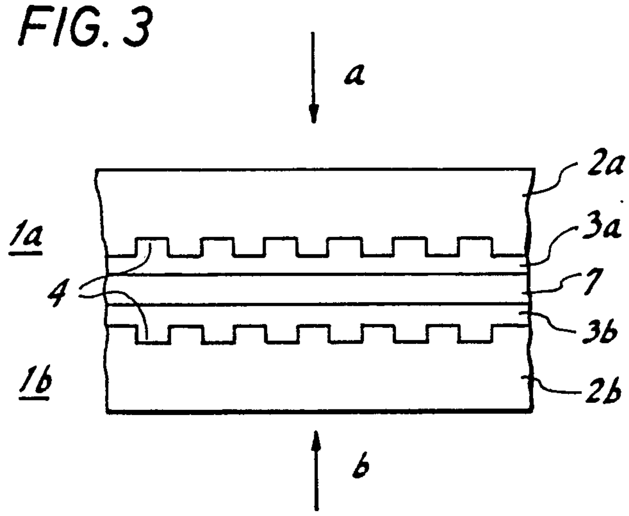

FIG. 4

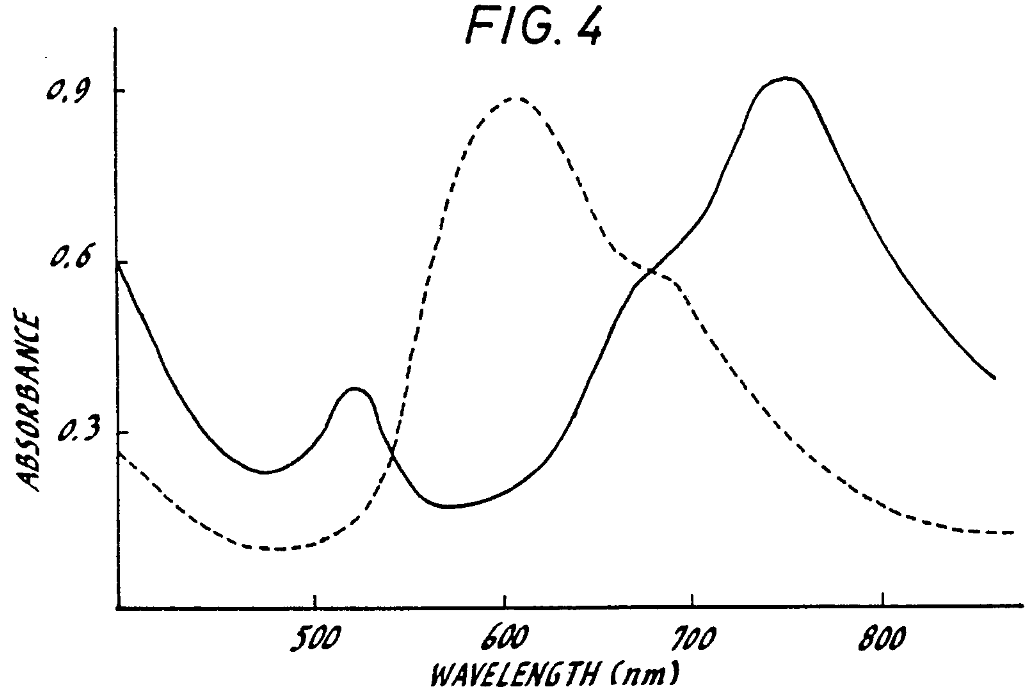
0,9
0,6
0,3
ABSORBANCE
500
600
700
800
WAVELENGTH (nm)

FIG. 5

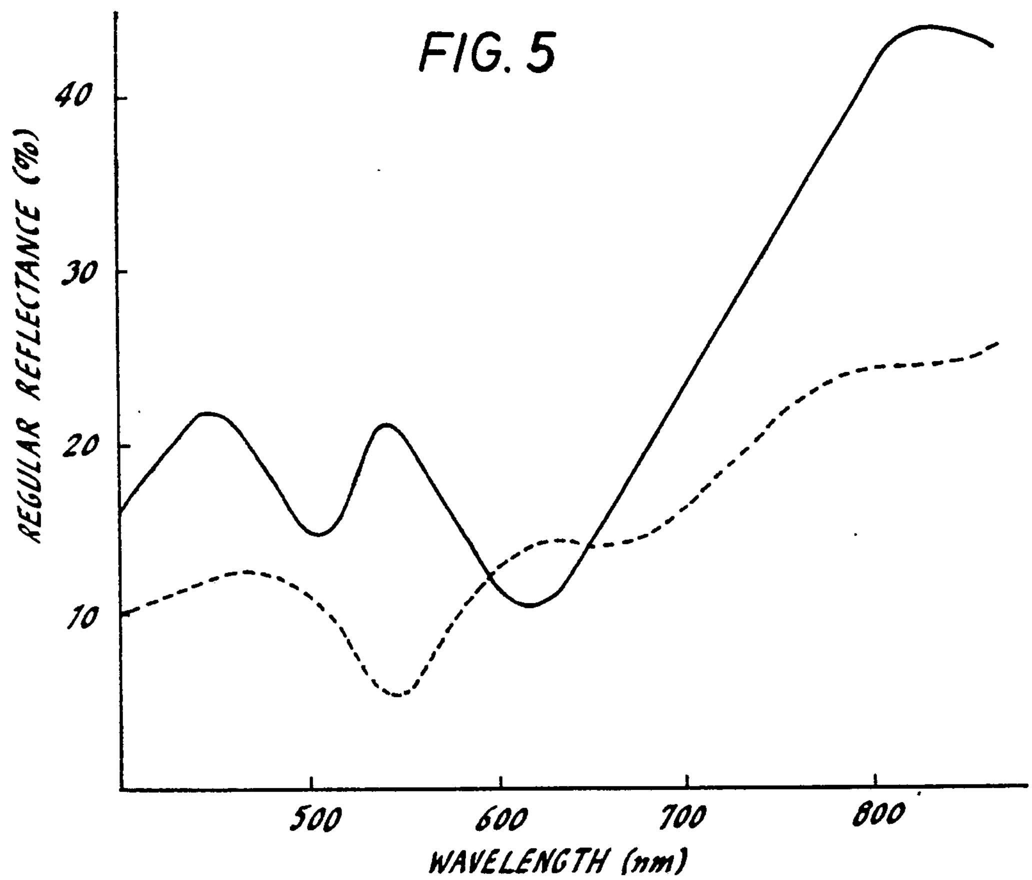
40
30
20
10
REGULAR REFLECTANCE (%)
500
600
700
800
WAVELENGTH (nm)